(19) Europäisches Patentamt
European Patent Office
Office européen des brevets

(11) **EP 3 841 401 B1**

(12) **EUROPEAN PATENT SPECIFICATION**

(45) Date of publication and mention
of the grant of the patent:
**13.11.2024 Bulletin 2024/46**

(21) Application number: **19758406.3**

(22) Date of filing: **22.08.2019**

(51) International Patent Classification (IPC):
$G01S\ 17/36^{(2006.01)}$   $G01S\ 7/481^{(2006.01)}$
$G01S\ 7/499^{(2006.01)}$   $G01B\ 9/02^{(2022.01)}$
$G01S\ 7/484^{(2006.01)}$   $G01S\ 7/497^{(2006.01)}$
$G01S\ 13/86^{(2006.01)}$

(52) Cooperative Patent Classification (CPC):
**G01S 7/499; G01S 7/4812; G01S 7/484;
G01S 7/497; G01S 13/865; G01S 17/36**

(86) International application number:
**PCT/EP2019/072510**

(87) International publication number:
**WO 2020/039039 (27.02.2020 Gazette 2020/09)**

(54) **SYSTEMS AND METHODS FOR MEASURING A DISTANCE TO A TARGET AND THE COMPLEX REFLECTANCE RATIO OF A TARGET**

SYSTEME UND VERFAHREN ZUM MESSEN EINER ENTFERNUNG ZU EINEM ZIEL UND DES KOMPLEXEN REFLEXIONSVERHÄLTNISSES EINES ZIELES

SYSTÈMES ET PROCÉDÉS POUR MESURER UNE DISTANCE À UNE CIBLE ET LE RAPPORT DE RÉFLECTANCE COMPLEXE D'UNE CIBLE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **22.08.2018 GB 201813698**

(43) Date of publication of application:
**30.06.2021 Bulletin 2021/26**

(73) Proprietor: **Aston University
Birmingham
West Midlands B4 7ET (GB)**

(72) Inventors:
• **SERGEYEV, Sergey**
  **Birmingham West Midlands B4 7ET (GB)**
• **TURITSYN, Sergei**
  **Birmingham West Midlands B4 7ET (GB)**

(74) Representative: **Mewburn Ellis LLP
Aurora Building
Counterslip
Bristol BS1 6BX (GB)**

(56) References cited:
**US-A1- 2018 231 654**

• JOOHYUNG LEE ET AL: "Paper;Absolute distance measurement by dual-comb interferometry with adjustable synthetic wavelength;Absolute distance measurement by dual-comb interferometry with adjustable synthetic wavelength", MEASUREMENT SCIENCE AND TECHNOLOGY, IOP, BRISTOL, GB, vol. 24, no. 4, 1 March 2013 (2013-03-01), pages 45201, XP020239765, ISSN: 0957-0233, DOI: 10.1088/0957-0233/24/4/045201

• DAVID R CARLSON ET AL: "Dual-comb interferometry via repetition-rate switching of a single frequency comb", ARXIV.ORG, CORNELL UNIVERSITY LIBRARY, 201 OLIN LIBRARY CORNELL UNIVERSITY ITHACA, NY 14853, 14 June 2018 (2018-06-14), XP080890514

• SANDRO M. LINK ET AL: "Dual-comb modelocked laser", OPTICS EXPRESS, vol. 23, no. 5, 23 February 2015 (2015-02-23), pages 5521, XP055632258, DOI: 10.1364/OE.23.005521

**Description**

TECHNICAL FIELD OF THE INVENTION

The present invention relates to methods and systems for determining a distance to a target using LIDAR in combination with RADAR methods.

BACKGROUND TO THE INVENTION

More and more nowadays, it is useful if not necessary to be able to accurately locate and/or track objects. One field in which this is particularly applicable is in the field of remote sensing in automotive applications. This is especially relevant due to the advent of driverless cars.

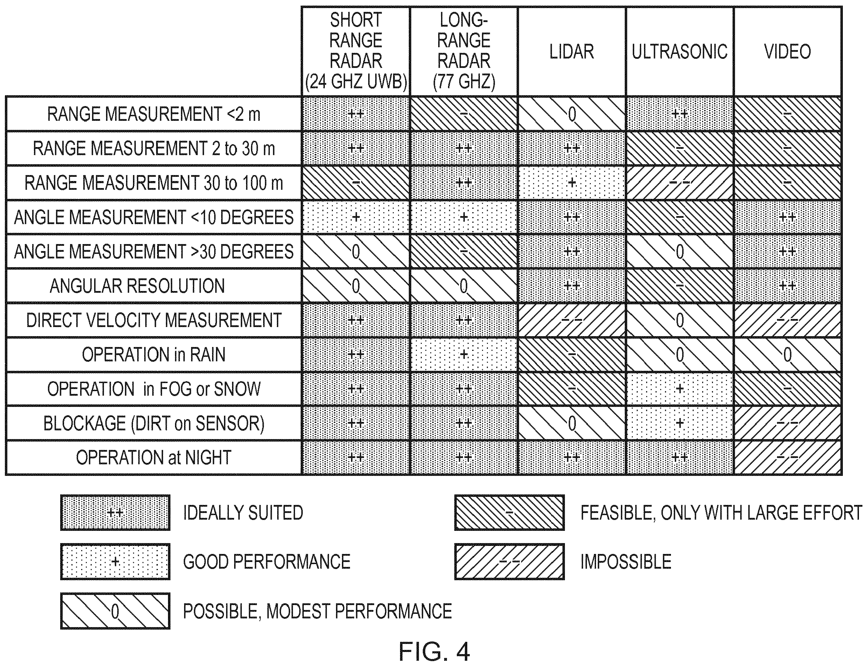

Numerous techniques are known for distance measurement, but each of these suffers in some way from disadvantages such as poor range, poor angular range, or poor angular resolution. In addition to this, natural phenomena such as rain, fog or snow can also act to preclude accurate distance measurements. For example, while short-range radar measurements are well-suited for measurement at ranges up to around 30 m. their performance is reduced above this range. In addition to this, the angular resolution possible is reduced. Techniques such as LIDAR have better angular resolution, but are unable, for example to perform direct velocity measurements, and experience substantially reduced performance in conditions such as fog or snow. The table shown in Fig. 4[1] shows a comparison of various remote sensing techniques, and highlights the advantages and disadvantages of each. For example, short range (24 GHz) RADAR is less effective for distances of more than 30m, and it is also difficult or impossible to recognize the texture of the target. Long range (77 GHz) RADAR is less effective for short ranges of less than 2m, and once again it is difficult or impossible to recognize the texture of the target.

[1] A. Jenkins, "Remote sensing technology for automotive safety", in Microwave Journal, 2007, Vol. 50.

From this, it is clear that there is a desire for a remote sensing technique which is able to operate well over all ranges and angles, as well as being able to operate in inclement conditions such as fog, snow, or rain.

The present invention seeks to overcome these problems.

Lee et al. (2013)[2] proposes a method of measuring absolute distance by dual-comb interferometry using two femtosecond lasers of different pulse repetition rates and adjustable synthetic wavelength.

[2] J. Lee et al., "Absolute distance measurement by dual-comb interferometry with adjustable synthetic wavelength", in Measurement Science and Technology, IOP, Bristol, GB, 2013, Vol. 24

Carlson et al. (2018)[3] demonstrates another dual-comb interferometry technique for absolute distance metrology using repetition-rate switching of a single frequency comb.

[3] D. R. Carlson et al., "Dual-Comb Interferometry via Repetition-Rate Switching of a Single Frequency Comb", Arxiv.Org, Cornell University Library, 201 Olin Library Cornell University Ithaca, NY 2018, 14853

US 2018/231654 A1 proposes a method for calibrating a LiDAR system at a first location with a radar system at a second location.

SUMMARY OF THE INVENTION

Broadly speaking, the present invention eliminates the need for the use of a dual-wavelength laser by making use of a technique in which measurements taken using two different states of polarization, rather than two wavelengths, are employed determine the distance to a target. Specifically, a first aspect of the present invention provides a method for measuring the distance to a target according to claim 1.

The beam of light is generated by a laser. Specifically, the beam of light is generated by a single laser, which may be a dual-comb mode locked laser, such as those described in Link et al. (2015)[4]. In order to prevent interference between the light of the first pulse train and the light of the second pulse train, the first state of polarization is orthogonal or substantially orthogonal to the second state of polarization. Said single laser includes a birefringent component to generate the first pulse train and the second pulse train having different states of polarizations and repetition rates.

[4] Sandro M. Link, Alexander Klenner, Mario Mangold, Christian A. Zaugg, Matthias Golling, Bauke W. Tilma, and Ursula Keller, "Dual-comb modelocked laser," Opt. Express 23, 5521-5531 (2015)

In the present application, the repetition rate $f_i$ refers to the number of pulses of light emitted per unit time, preferably per second. In preferred embodiments, the first repetition rate is different from the second repetition rate. This leads to an evolution in the phase shift between the pulses of the first pulse train and the pulses of the second pulse train. This evolution in the phase shift between two pulse trains each having a different state of polarization allows the measurement of the distance of an object without the need for the use of dual-wavelength light sources or multiple light sources.

The method further includes the step of splitting the beam of light using a first polarization beam splitter into a first path for the first pulse train and a second path for the second pulse train.

The plane of polarization of the first pulse train may then be rotated to generate a third pulse train having a reference component in the first plane of polarization, and a target component in the second state of polarization. This is because a beam of plane polarized light can be decomposed into orthogonal components, as the skilled person is well aware. In preferred embodiments, the plane of polarization is rotated by exactly or approximately $\pm \pi/4$, so that the resulting orthogonal components have similar or equal amplitudes. In this manner, the skilled person appreciates that the third pulse train is generated based on the first pulse train. It should be stressed that in the following description, the reference component may be in the second state of polarization and the target component may be in the first state of polarization. For brevity, this alternative will not be described in depth, but the skilled person will appreciate that the method applies equally well to both situations. In the embodiment described, both the reference and target components of the third pulse train have the first repetition rate $f_1$. In embodiments as described in this paragraph, the reference signal is preferably generated based on the reference component of the third pulse train, and the target signal is preferably generated based on the target component of the third pulse train.

Still in the first path, the third pulse train may be split, using a second polarization beam splitter, into its constituent components. Specifically, the reference component may form a reference pulse train, and the target component may form a target pulse train. The reference pulse train may then be directed along a reference arm, and the target pulse train may then be directed along a target arm. The reference arm preferably includes a reference mirror which reflects the reference pulse train back either to the second polarization beam splitter, or a third polarization beam splitter, at which point the reference pulse train is referred to as the reference signal. The reference mirror is located a predetermined or known distance from the second polarization beam splitter. More specifically, the reference mirror is located a predetermined or known optical path length from the second polarization beam splitter.

Again, still in the first path, the target pulse train is preferably directed towards the target. In some embodiments, the target arm may include a beam expander for expanding the target pulse train in order to obtain greater coverage of the target by the target pulse train. The target pulse train is then reflected by the target, and the method further includes the step of receiving the reflected target signal (as it is now referred) from the target. The target signal is then directed towards either the second polarization beam splitter or a third polarization beam splitter, in which it is combined with the reference signal. It should be noted that because the reference signal and the target signal have different, preferably orthogonal, states of polarization, when they are combined back into a single beam, the two components do not interfere with each other.

The above description focuses on the optional method steps which are performed in the first path. The second path, we recall, contains the second pulse train, having the second state of polarization, and the second repetition rate $f_2$. The plane of polarization of the second pulse train is then be rotated to generate the local oscillator signal having a reference component in the first plane of polarization and a target component in the second state of polarization. This is because a beam of plane polarized light can be decomposed into orthogonal components, as the skilled person is well aware. In this manner, the skilled person appreciates that the local oscillator signal is generated based on the second pulse train. For illustrative purposes, it should be stressed that in the following description, the reference component may be in the second state of polarization and the target component may be in the first state of polarization. For brevity, this non-claimed alternative will not be described in depth, but the skilled person will appreciate that the method applies equally well to both situations. In the embodiment described, both the reference and target components of the local oscillator signal have the second repetition rate $f_2$.

Then, the local oscillator signal is split into its constituent components, and the following steps take place:

combining the reference signal and the reference component of the local oscillator signal, to generate the first result; and

combining the target signal and the target component of the local oscillator signal, to generate the second result.

In preferred embodiments, the first and second results are in the form of a first interferogram and a second interferogram respectively. These combinations are possible because the target signal and the target component of the local oscillator signal are both in the first state of polarization and are therefore able to interfere. The same applies to the reference signal and the reference component of the local oscillator signal. The step of calculating the distance to the target preferably includes applying a Fourier transform to the first interferogram and the second interferogram. The difference in path lengths taken by the reference signal and the target signal can then be calculated.

In the present invention, the accuracy of the distance measurement is improved by combining the results obtained in line with the above description, which may be referred to herein as "LIDAR methods", with supplemental results taken using RADAR methods. The method includes the step of using RADAR to generate a third result indicative of the distance to the target, and the step of determining uses the third result. Specifically, the third result is used to calibrate the distance determination which is calculated using the first and second results. This is useful in situations in which LIDAR methods are less effective, such as during fog, rain and snow. Similarly, precision of RADAR methods are improved by using the first and second results to calibrate a distance determination calculated the first and second results. The combination of LIDAR/RADAR techniques also gives access to texture data.

The third result may be generated using the same beam of light from which the first result and the second result are ultimately generated. The step of generating the third result may include, in the first path, before the target pulse train is directed towards the target, it may be split into two separate pulse trains, e.g. by a beam splitter. One of said pulse trains is directed towards the target, optionally via a beam expander, and is reflected in the form of the target signal. The other beam, referred to herein as the RADAR pulse train is preferably converted into a transmission RADAR signal. In this application, the term RADAR signal refers to an electromagnetic signal having a frequency of 100 MHz to 100 GHz. The RADAR pulse train is incident upon a first photodetector, in order to convert the optical signal into an electronic RADAR signal. Thereafter, the RADAR signal is directed towards a transmission antenna, whereupon it is transmitted towards the target. In some embodiments, the electronic signal may be passed to the transmission antenna via an electronic amplifier, to ensure that the signal is sufficiently strong to reach the target, be reflected and then subsequently detected. The RADAR signal is then received by a receiving antenna.

In the second path, the local oscillator pulse train, before being split into its constituent components by the polarization beam splitter, is divided into two separate pulse trains, one to be directed towards the polarization beam splitter. The other optical pulse train is then modulated, using an amplitude modulator, by the RADAR signal received by the receiving antenna. The RADAR signal, having originated from the first path, is at the first repetition rate, and the "other" optical pulse train as referred to here, is at the second repetition rate. In this way, when the RADAR signal is used to modulate the other optical pulse train, the modulated optical signal has a beating frequency which is equal to or approximately equal to the difference between the first repetition rate and the second repetition rate. This modulated signal is detected by a second photodetector in order to generate the third result.

A second aspect of the present invention provides a system which is able to perform the method of the first aspect of the invention. Specifically, the second aspect of the invention provides a system for measuring the distance to a target, the system including:

a light source configured to generate a beam of light composed of:

a first pulse train having a first state of polarization (SOP) and a first repetition rate $f_1$, and
a second pulse train having a second state of polarization and a second repetition rate $f_2$;

means for generating a reference signal and a target signal, each based on the first pulse train;
means for generating a local oscillator signal, based on the second pulse train;
means for combining the reference signal and the local oscillator signal to generate a first result;
means for combining the target signal and the local oscillator signal to generate a second result;
a processor configured to determine the distance to the target using the first result and the second result.

The light source is a single laser. The laser includes a birefringent component configured to generate the first pulse train and the second pulse train having different states of polarization and repetition rates. Specifically, the laser may be in the form of a dual-comb mode locked laser, such as is described in Link et al. (2015)[1]. The first and second states of polarization are preferably linearly polarized, each having an associated plane of polarization. In order to prevent interference between the light of the first pulse train and the light of the second pulse train, the first state of polarization is orthogonal or substantially orthogonal to the second state of polarization.

In preferred embodiments, the first repetition rate is different from the second repetition rate. This leads to an evolution in the phase shift between the pulses of the first pulse train and the pulses of the second pulse train. This evolution in the phase shift between two pulse trains each having a different state of polarization allows the measurement of the distance of an object without the need for the use of dual-wavelength light sources or multiple light sources.

The system includes a first polarization beam splitter configured to split the beam of light into a first path for the first pulse train and a second path for the second pulse train. The means for generating a reference signal are located within this first path. In this application, the term "path" should be understood to mean a route along which the pulse trains and other signals travel when the system is in use. In the description below, it should be noted that all components may be connected to each other using connectors. In other words, the means for generating the reference signal and the target signal preferably include the components set out below, in addition to a series of connectors arranged to optically connect those components. In preferred embodiments, the connectors are in the form of optical fibres, or other connectors configured to convey optical signals from one location to another.

The means for generating the reference and target signals preferably includes a first polarization controller located in the first path, the first polarization controller configured to rotate the plane of polarization to generate a third pulse train having a reference component in the first plane of polarization, and a target component in the second state of polarization. This is because a beam of plane polarized light can be decomposed into orthogonal components, as the skilled person is well aware. In this manner, the skilled person appreciates that the third pulse train is generated based on the first pulse train. It should be stressed that in the following description, the reference component may be in the second state of polarization and the target component may be in the first state of polarization. For brevity, this alternative will not be described in depth, but the skilled person will appreciate that the method applies equally well to both situations. In the embodiment described, both the reference and target components of the third pulse train have the first repetition rate $f_2$. In embodiments as described in this paragraph, the reference signal is preferably generated based on the reference component of the third pulse train, and the target signal is preferably generated based on the target component of the third pulse train.

The means of generating the reference and target signals may further include a second polarization beam splitter configured to split the third pulse train into its constituent components. Specifically, reference component may form a reference pulse train, and the target component may form a target pulse train. The first path may include a reference arm and a target arm, and the second polarization beam splitter may be configured to direct the reference pulse train and the target pulse train along the reference arm and target arm respectively. The reference arm preferably includes a reference mirror arranged to reflect the reference pulse train back either to the second polarization beam splitter or a third polarization beam splitter, at which point the reference pulse train is referred to as the reference signal. The reference mirror is located a predetermined or known distance from the second polarization beam splitter. More specifically, the reference mirror is located a predetermined or known optical path length from the second polarization beam splitter.

As discussed, the second polarization beam splitter may be configured to direct the target pulse train along the target arm, i.e. towards the target. The end of the target arm at which the second polarization beam splitter is referred to herein as the proximal end, and the opposite end is the distal end. In preferred embodiments, there is an emitter located at or near to the distal end of the target arm, the emitter configured to direct the target pulse train towards the target. The emitter may be in the form of a beam expander configured to expand the coverage of the target pulse train.

It should be understood here that the emitter directs the target pulse train towards the target through the intervening atmosphere (which is most likely air), and not via any kind of optical connector such as an optical fibre. The target reflects the target pulse train to generate a reflected target signal. The system preferably includes a target receiver configured to receive the reflected target signal from the target, and to direct it towards the second polarization beam splitter or a third polarization beam splitter, in which it is combined with the reference signal. As is appreciated by the skilled person, polarization beam splitters are able to operate in reverse, i.e. to combine two differently-polarized signals as well as split them.

In embodiments in which the target and reference signals are combined by the second polarization beam splitter, the second polarization beam splitter is then configured to direct them towards a third polarization beam splitter.

The means for generating the local oscillator signal are preferably located in the second path. As discussed, the first polarization beam splitter is configured to direct the second pulse train to the second path. The means for generating the local oscillator signal preferably includes a second polarization controller configured to rotate the plane of polarization of the second pulse train to generate a local oscillator pulse train (also referred to herein as a local oscillator signal) having a reference component in the first plane of polarization and a target component in the second state of polarization. This is because a beam of plane polarized light can be decomposed into orthogonal components, as the skilled person is well aware. In this manner, the skilled person appreciates that the local oscillator signal is generated based on the second pulse train. It should be stressed that in the following description, the reference component may be in the second state of polarization and the target component may be in the first state of polarization. For brevity, this alternative will not be described in depth, but the skilled person will appreciate that the method applies equally well to both situations. In the embodiment described, both the reference and target components of the local oscillator signal have the second repetition rate $f_2$.

The target signal and the reference signal are directed towards the third beam splitter, as discussed above. The third beam splitter may form the means for combining the reference signal and the local oscillator signal to generate a first result, and the means for combining the target signal and the local oscillator signal to generate a second result. It should be noted that in other embodiments, the third beam splitter may form the means for combining the reference signal and the local oscillator signal, and an additional fourth beam splitter may form the means for combining the target signal and the local oscillator signal. The skilled person will appreciate that in such cases, slight modifications will need to be made to the arrangements discussed below, but that these modifications are well within the remit of the skilled person without the need for exerting undue inventive effort.

The third beam splitter, more specifically, may be configured to combine the reference signal and the reference component of the local oscillator signal to generate the first result, and similarly the third beam splitter (or fourth beam splitter) may be configured to combine the target signal and the target component of the local oscillator signal to generate the second result.

In preferred embodiments, the first and second results are in the form of a first interferogram and a second interferogram respectively. These combinations are possible because the target signal and the target component of the local oscillator signal are both in the first state of polarization and are therefore able to interfere. The same applies to the reference signal and the reference component of the local oscillator signal. The system preferably includes a processor configured to calculate the distance to the target using the first result and the second result. In some embodiments, the processor may include a Fourier transform module which is configured to apply a Fourier transform to the first and second interferograms, in order to determine the distance to the target.

The system further includes means for using RADAR to generate a third result, and wherein the processor is configured to use the first result, the second result and the third result to determine the distance to the target. Specifically, the third result is used to calibrate the distance determination which is calculated using the first and second results. This is useful in situations in which LIDAR methods are less effective, such as during fog, rain and snow. Similarly, precision of RADAR methods is improved by using the first and second results to calibrate a distance determination calculated the first and second results.

The third result may be generated using the same beam of light from which the first result and the second result are ultimately generated.

In some embodiments, the target arm of the first path may include a fifth beam splitter, configured to split the target pulse into a first target pulse train, directed along a first target sub-arm and a RADAR pulse train which is directed along a second target sub-arm. The second sub-arm preferably includes means to convert the RADAR pulse train into a RADAR signal. Specifically, the second target sub-arm may include a first photodetector configured to convert the RADAR pulse train into an electronic signal. The second target sub-arm may further include a transmission antenna, configured to transmit the electronic signal towards the target, in the form of the RADAR signal. In some embodiments, the second target sub-arm may further include an electronic amplifier located between the fifth beam splitter and the transmission antenna, to ensure that the signal is sufficiently strong to reach the target, be reflected and then subsequently detected. The system preferably also includes a receiving antenna configured to receive the reflected RADAR signal.

The third beam splitter, in addition to performing the combination of signals set out above, may also be configured to split the local oscillator pulse train into a pulse train in a first combination path in which the reference and target signals are combined with respective components of the local oscillator signal, and a pulse train in a second combination path, the second combination path including the receiving antenna.

In the second path, the local oscillator pulse train is, before being split into its constituent components by the polarization beam splitter, be divided into two separate pulse trains, one to be directed towards the polarization beam splitter. The other pulse train is then modulated, using an amplitude modulator, by the RADAR signal received by the receiving antenna. The RADAR signal, having originated from the first path, is at the first repetition rate, and the "other" optical pulse train as referred to here, is at the second repetition rate. In this way, when the RADAR signal is used to modulate the other optical pulse train, the modulated optical signal has a beating frequency which is equal to or approximately equal to the difference between the first repetition rate and the second repetition rate. This modulated signal is detected by a second photodetector in order to generate the third result.

For illustrative purposes, a third non-claimed aspect may provide a method for measuring the distance to a target, the method including the steps of:

generating a first result and a second result using LIDAR methods;
generating a third result using RADAR methods;
determining the distance to the target using the first result, the second result, and the third result.

The generation of the first and second results may take place using any or all of the steps which are outlined with reference to the first aspect of the invention. As a result, the optional features set out above with reference to the first and second aspects of the invention are also equally applicable to the step of generating the first result and second result of the third non-claimed aspect, where compatible. It should be noted that the skilled person is well-aware which features are compatible. Along a similar vein, the step of generating the third result may take place using any or all of the steps which are set out above in relation to using RADAR to generate a third result, in the third non-claimed aspect. It is particularly preferred that the first and second results are generated based on a beam of light, the beam being composed of a first pulse train having a first state of polarization (SOP) and a first repetition rate $f_1$, and a second pulse train having a second state of polarization and a second repetition rate $f_2$. It is further preferred that the third result is generated based on the same beam of light. A fourth non-claimed aspect provides a system for performing the method of the third non-claimed aspect, again with optional features relating to the first and second aspects applying.

In a fifth non-claimed aspect, LIDAR techniques may be applied to ellipsometry. As the skilled person is aware, ellipsometry is a technique for investigating the dielectric properties of e.g. thin films. The technique of ellipsometry relies, at least in part, on the complex reflectance ratio (CRR), denoted $\rho$, which is measured as a function of the amplitude ratio $\tan\Psi$ and the phase difference $\theta$ between the (orthogonal) $x$- and $y$- states of polarization. The $x$- and $y$- directions are chosen arbitrarily here; the skilled person appreciates that any two orthogonal states of polarization may apply. The complex reflectance ration $\rho$ may be defined as follows:

$$\rho = \tan(\Psi) e^{i\theta}$$

It should be noted that in some literature, the phase difference is denoted $\Delta$ rather than $\theta$, but this has not been used in the present application in order to avoid confusion with $\Delta f$ which has been used to denote the difference in repetition rates between the two SOPs. Specifically, the fifth non-claimed aspect provides a method for obtaining the complex reflectance ratio associated with a target object, the method including the steps of:

generating a beam of light, the beam being composed of:

a first pulse train in a first state of polarization (SOP) and a first repetition rate $f_1$, and
a second pulse train in a second state of polarization and a second repetition rate $f_2$;

generating, based on the first pulse train:

a first reference signal in the first state of polarization;
a second reference signal in the second state of polarization;
a first target signal in the first state of polarization;
a second target signal in the second state of polarization;

generating, based on the second pulse train:

a first local oscillator signal in the first state of polarization; and
a second local oscillator signal in the second state of polarization;

combining the first reference signal and the first local oscillator signal to generate a first result;
combining the first target signal and the first local oscillator signal to generate a second result;
combining the second reference signal and the second local oscillator signal to generate a third result;
combining the second target signal and the second local oscillator signal to generate a fourth result;
determining the complex reflectance ratio using the first result, the second result, the third result and the fourth result.

In preferred non-claimed embodiments of the fifth aspect, the beam of light is generated by a laser. Specifically, it is preferred that the beam of light is generated by a single laser, which may be a dual-comb mode locked laser, such as those described in Link et al. (2015)[5].

In order to prevent interference [5] Sandro M. Link, Alexander Klenner, Mario Mangold, Christian A. Zaugg, Matthias Golling, Bauke W. Tilma, and Ursula Keller, "Dual-comb modelocked laser," Opt. Express 23, 5521-5531 (2015) between the light of the first pulse train and the light of the second pulse train, it is preferred that the first state of polarization is orthogonal or substantially orthogonal to the second state of polarization. In some embodiments, said single laser may include a birefringent component to generate the first pulse train and the second pulse train having different states of polarizations and repetition rates. This gives rise to improved operation in e.g. snow, rain and fog, as well as the ability to recognize the texture of the target.

In the present application, the repetition rate $f_i$ refers to the number of pulses of light emitted per unit time, preferably per second. In preferred non-claimed embodiments, the first repetition rate is different from the second repetition rate. This leads to an evolution in the phase shift between the pulses of the first pulse train and the pulses of the second pulse train. This evolution in the phase shift between two pulse trains each having a different state of polarization allows the measurement of the distance of an object without the need for the use of dual-wavelength light sources or multiple light sources.

In some embodiments of the fifth aspect, the method further includes the step of splitting the beam of light using a first polarization beam splitter into a first path for the first pulse train and a second path for the second pulse train.

The plane of polarization of the first pulse train may then be rotated to generate a third pulse train having a component in the first state of polarization and a component in the second state of polarization, both components having a repetition rate $f_1$. In preferred non-claimed embodiments, the plane of polarization is rotated by exactly or approximately $\pm \pi/4$, so that the resulting orthogonal components have similar or equal amplitudes. The third pulse train may then be divided into a reference pulse train having a component in the first state of polarization and a component in the second state of polarization, both components having a repetition rate $f_1$, and a target pulse train also having a component in the first state of polarization and a component in the second state of polarization, both components having a repetition rate $f_1$. In some non-claimed embodiments, this may be done using a beam splitter. However, in preferred non-claimed embodiments, a semi-transparent reference mirror is used. In those embodiments, part of the third pulse train is reflected, to generate the reference pulse train, and part of the third pulse train is transmitted to generate the target pulse train.

When part of the third pulse train is reflected from the reference mirror, the reference pulse train is reflected. The reflected reference pulse train is composed of a component in the first state of polarization which is the first reference signal, and a component in the second state of polarization which is the second reference signal. Since these signals are generated in the first path, into which only the first pulse train was directed, it may be said that they are based on the first pulse train, particularly since they retain the first repetition rate $f_1$.

The part of the third pulse train which is transmitted by the semi-transparent reference mirror (i.e. the target pulse train) is then directed towards the target. In some non-claimed embodiments, the target pulse train is directed to the target via a beam expander. Then, both of its constituent components are reflected by the target. The reflection of the component in the first state of polarization gives rise to the first target signal, and the reflection of the component in the second state of polarization gives rise to the second target signal. Since these signals are generated in the first path, into which only the first pulse train was directed, it may be said that they are based on the first pulse train, particularly since they retain the first repetition rate $f_1$. It will be appreciated that in this aspect of the invention, i.e. for the calculation of the complex reflectance ratio, components which are in both the first and second state of polarization are directed towards the target, in contrast to the first, second and third aspects of the invention, in which only the target component is directed towards the target.

The above description focuses on the optional method steps which are performed in the first path. In the second path, which we recall contains the second pulse train, in the second state of polarization, and the second repetition rate $f_2$.

The plane of polarization of the second pulse train may then be rotated to generate a local oscillator pulse train having a component in the first state of polarization and a component in the second state of polarization, both components having a repetition rate $f_2$. In preferred non-claimed embodiments, the plane of polarization is rotated by exactly or approximately $\pm \pi/4$, so that the resulting orthogonal components have similar or equal amplitudes. Here, the component of the local oscillator pulse train having the first state of polarization is the first local oscillator signal, and the component of the local oscillator pulse train having the second state of polarization is the second local oscillator signal. In this manner, the skilled person appreciates that the first and second local oscillator signals are generated based on the second pulse train, particularly since they retain the second repetition rate $f_2$.

The above-mentioned combinations of signals then takes place, for example in a polarization beam splitter. It should be noted that in some non-claimed embodiments, the first and second reference and target signals may be conveyed in the same optical fibre. Alternatively, they may be conveyed separately, in which case two separate beam splitters may be used to perform the combination of signals.

Any or all of the first, second, third and fourth result may be in the form of an interferogram, arising respectively as a result of interference between the first reference signal and first local oscillator signal, the first target signal and the first local oscillator signal, the second reference signal and the second local oscillator signal, the second target signal and the second local oscillator signal. Each of these pairs of signals is able to interfere because they are in the same state of polarization. In some non-claimed embodiments, the first reference signal and the first target signal may be conveyed along a single optical fibre. In order to obtain the first result and the second result in such non-claimed embodiments, time gating may be used. Time gating is a known technique in the art whereby a signal or pulse that provides a time window is applied, so that a particular event or signal from among many can be measured, and others are eliminated or discarded. The same applies for the second reference signal and the second target signal. This can also help to prevent interference between those pairs of signals.

The step of determining the complex reflectance ratio using the first, second, third and fourth results may include taking the Fourier transform of any or all of those results. The mathematical details are set out later in the application. In some non-claimed embodiments, the method may further include a step of determining the distance to the target using the first result and the second result. In other non-claimed embodiments, the method may further include a step of determining the distance to the target using the third result and the fourth result. These non-claimed embodiments may, in effect, be combined, and the distance determination may be performed using the first result, the second result, the third result, and the fourth result. Using all four results may provide a more accurate distance measurement. Again, a Fourier transform may be performed on one, any or all of the results in question in order to obtain a distance measurement.

For illustrative purposes, a sixth non-claimed aspect provides a system for obtaining the complex reflectance ratio associated with a target object, the system including:

a light source configured to generate a beam of light composed of:

a first pulse train in a first state of polarization and having a first repetition rate $f_1$,
a second pulse train in a second state of polarization and having a second repetition rate $f_2$;

means for generating, based on the first pulse train:

a first reference signal in the first state of polarization;
a second reference signal in the second state of polarization;
a first target signal in the first state of polarization;
a second target signal in the second state of polarization;

means for generating, based on the second pulse train:

a first local oscillator signal in the first state of polarization; and
a second local oscillator signal in the second state of polarization;

means for combining the first reference signal and the first local oscillator signal to generate a first result;
means for combining the first target signal and the first local oscillator signal to generate a second result;
means for combining the second reference signal and the second local oscillator signal to generate a third result;
means for combining the second target signal and the second local oscillator signal to generate a fourth result;
a processor configured to determine the complex reflectance ratio using the first result, the second result, the third result and the fourth result.

In preferred non-claimed embodiments of the sixth aspect, the light source is a laser. Specifically, it is preferred that the beam of light is generated by a single laser, which may be a dual-comb mode locked laser, such as those described in Link et al. (2015)[5].

In order to prevent interference between the light of the first pulse train and the light of the second pulse train, it is preferred that the first state of polarization is orthogonal or substantially orthogonal to the second state of polarization. In some non-claimed embodiments, said single laser may include a birefringent component to generate the first pulse train and the second pulse train having different states of polarizations and repetition rates.

In the present application, the repetition rate $f_i$ refers to the number of pulses of light emitted per unit time, preferably per second. In preferred non-claimed embodiments, the first repetition rate is different from the second repetition rate. This leads to an evolution in the phase shift between the pulses of the first pulse train and the pulses of the second pulse train. This evolution in the phase shift between two pulse trains each having a different state

[6] Sandro M. Link, Alexander Klenner, Mario Mangold, Christian A. Zaugg, Matthias Golling, Bauke W. Tilma, and Ursula Keller, "Dual-comb modelocked laser," Opt. Express 23, 5521-5531 (2015) of polarization allows the measurement of the distance of an object without the need for the use of dual-wavelength light sources or multiple light sources.

The system may include a first polarization beam splitter configured to split the beam of light into a first path for the pulse train and a second path for the second path for the second pulse train. The means for generating the first reference signal, the first target signal, the second reference signal and the second target signal are located in the first path.

The means for generating the reference signals and target signals preferably includes a first polarization controller, located in the first path, and configured to rotate the plane of polarization of the first pulse train to generate a third pulse train having a component in the first state of polarization and a component in the second state of polarization, both components having a repetition rate $f_1$. In preferred non-claimed embodiments, the first polarization controller is configured to rotate the plane of polarization by exactly or approximately $\pm\pi/4$, so that the resulting orthogonal components have similar or equal amplitudes.

The first path further preferably includes a component such as a semi-transparent mirror or beam splitter which is configured to divide the third pulse train into a reference pulse train having a component in the first state of polarization and a component in the second state of polarization, both components having a repetition rate $f_1$, and a target pulse train also having a component in the first state of polarization and a component in the second state of polarization, both components having a repetition rate $f_1$.

In preferred non-claimed embodiments, a semi-transparent reference mirror is used to divide the third pulse train. In such non-claimed embodiments, part of the third pulse train is reflected, to generate the reference pulse train, and part of the third pulse train is transmitted to generate the target pulse train.

When part of the third pulse train is reflected from the reference mirror, the reference pulse train is reflected. The reflected reference pulse train is composed of a component in the first state of polarization which is the first reference signal, and a component in the second state of polarization which is the second reference signal. Since these signals are generated in the first path, into which only the first pulse train was directed, it may be said that they are based on the first pulse train, particularly since they retain the first repetition rate $f_1$.

The part of the third pulse train which is transmitted by the semi-transparent reference mirror (i.e. the target pulse train) is then directed towards the target. In some non-claimed embodiments, the first path includes a beam expander, configured to direct (both components of) the target pulse train to the target. Then, both of its constituent components are reflected by the target. The reflection of the component in the first state of polarization gives rise to the first target signal, and the reflection of the component in the second state of polarization gives rise to the second target signal. Since these signals are generated in the first path, into which only the first pulse train was directed, it may be said that they are based on the first pulse train, particularly since they retain the first repetition rate $f_1$. It will be appreciated that in this aspect of the invention, i.e. for the calculation of the complex reflectance ratio, components which are in both the first and second state of polarization are directed towards the target, in contrast to the first, second and third aspects of the invention, in which only the target component is directed towards the target.

The above description focuses on the first path. In the second path, which we recall contains the second pulse train, in the second state of polarization, and the second repetition rate $f_2$. The second path preferable includes a second polarization controller, which is configured to rotate the plane of polarization to generate a local oscillator pulse train having a component in the first state of polarization and a component in the second state of polarization, both components having a repetition rate $f_2$. In preferred non-claimed embodiments, the plane of polarization is rotated by exactly or approximately $\pm \pi/4$, so that the resulting orthogonal components have similar or equal amplitudes. Here, the component of the local oscillator pulse train having the first state of polarization is the first local oscillator signal, and the component of the local oscillator pulse train having the second state of polarization is the second local oscillator signal. In this manner, the skilled person appreciates that the first and second local oscillator signals are generated based on the second pulse train, particularly since they retain the second repetition rate $f_2$.

The means for combining the various signals preferably includes one or more beam splitters (e.g. polarization beam splitters), arranged in reverse, such that they are able to combine beams, rather than further split them. This is well within the remit of the skilled person, and is common practice in the art. It should be noted that in some non-claimed embodiments, the first and second reference and target signals may be conveyed in the same optical fibre. Alternatively, they may be conveyed separately, in which case two separate beam splitters may be used to perform the combination of signals.

Any or all of the first, second, third and fourth result may be in the form of an interferogram, arising respectively as a result of interference between the first reference signal and first local oscillator signal, the first target signal and the first local oscillator signal, the second reference signal and the second local oscillator signal, the second target signal and the second local oscillator signal. Each of these pairs of signals is able to interfere because they are in the same state of polarization. In some non-claimed embodiments, the first reference signal and the first target signal may be conveyed along a single optical fibre. In order to obtain the first result and the second result in such non-claimed embodiments, a time gating module may be employed, configured to perform time gating. The same applies for the second reference signal and the second target signal. This can also help to prevent interference between those pairs of signals.

The step of determining the complex reflectance ratio using the first, second, third and fourth results may include taking the Fourier transform of any or all of those results. The mathematical details are set out later in the application. In some non-claimed embodiments, the method may further include a step of determining the distance to the target using the first result and the second result. In other non-claimed embodiments, the method may further include a step of determining the distance to the target using the third result and the fourth result. These non-claimed embodiments may, in effect, be combined, and the distance determination may be performed using the first result, the second result, the third result, and the fourth result. Using all four results may provide a more accurate distance measurement. Again, a Fourier transform may be performed on one, any or all of the results in question in order to obtain a distance measurement.

The invention here is presented with reference to five different aspects, each having optional features set out. It should be understood that the optional features set out above may be combined with features of any other aspect, to the extent that such a combination is compatible and physically possible. Merely because a given optional feature is not set out explicitly set out with reference to a given aspect does not mean that it cannot be combined with that aspect.

## BRIEF DESCRIPTION OF THE DRAWINGS

Embodiments of the invention will now be described with reference to the accompanying drawings, in which:

Fig. 1 shows an example of a system for distance measurement using both LIDAR and RADAR techniques.

Fig. 2 shows examples of mode locked lasers with dynamically evolving states of polarization[7 8 9 10 11 12].

Fig. 3 shows an example of the ellipsometric LIDAR system.

Fig. 4 shows a comparison of the properties of prior art remote sensing techniques.

[7] Tsatourian, V., Sergeyev, S. V., Mou, C., Rozhin, A., Mikhailov, V., Rabin, B., & Turitsyn, S. K. (2013). Scientific reports, 3, srep03154

[8] S. Sergeyev, Ch. Mou, A. Rozhin, S. K. Turitsyn, Optics Express, 20, 27434-27440 (2012)

[9] Ch. Mou, S. Sergeyev, A. Rozhin, S. Turistyn, "All-Fiber Polarization Locked Vector Soliton Laser Using Carbon Nanotubes", Optics Lett. 36, 3831-3833 (2011)

[10] S. V. Sergeyev, Optics Lett. 41, 4700-4703 (2016).

[11] Sergeyev, S. V., Mou, C., Turitsyna, E. G., Rozhin, A., Turitsyn, S. K., & Blow, K. (2014). Light: Science and Applications, 3(1), e131.

[12] Sergeyev, S. V. (2014). Phil. Trans. R. Soc. A, 372(2027), 20140006.

DETAILED DESCRIPTION OF THE DRAWINGS

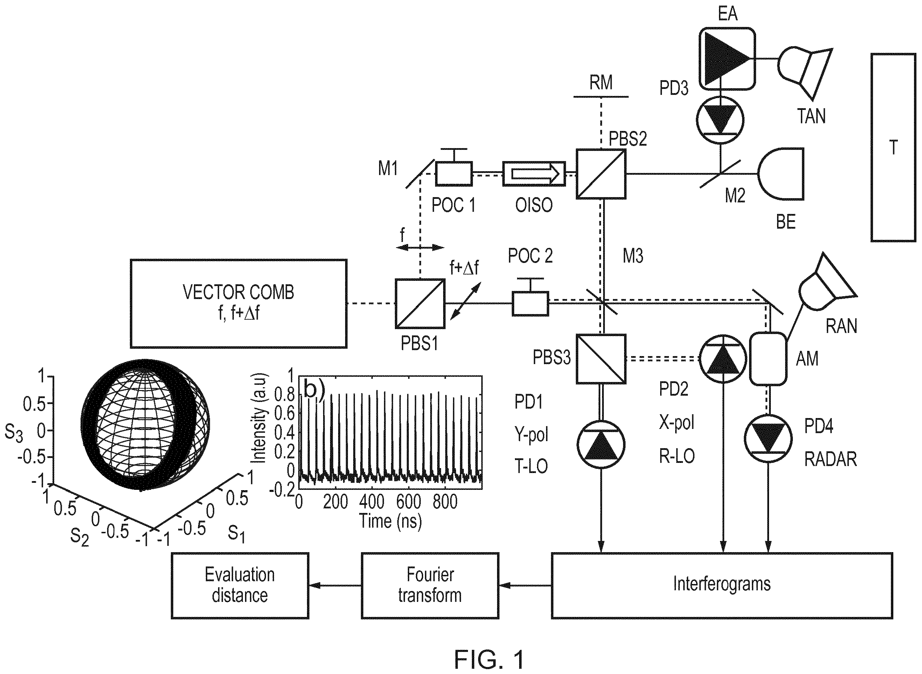

In Fig. 1, many components are shown as bulk components, but it should be noted that in practical realization, the components may be in the form of fibre components. This applies not only to the specific implementation shown in Fig. 1, but to all possible implementations of the invention.

The Dual-Comb (DC) technique for LIDAR uses two frequency combs with slightly different repetition rates $f$ and $(f + \Delta f)$ to collect the transmission data by a single detector and microwave spectrum analyser for a scan time of $S = 1/\Delta f$ with the step in time of $T_s = 1/f$. Thus, DCS maps the optical spectrum with bandwidth of $\Delta v$ (THz range) to the low frequency RF spectrum with bandwidth of $\Delta v/m$, where $m = f/\Delta f$ which is of 100 MHz

Specifically, in Fig. 1, the pulse train from the laser has the following properties: a pulse width $\Delta t$ of 1 ps, and a repetition rate of $f$ = 10 to 100 MHz. The pulse train includes two linear orthogonal states of polarization having powers $I_x = I_y$, and the phase difference between them evolving as $\Phi = 2\pi/N$, where $N$ = 10 to 100, and repetition rates $f$ and $(f + \Delta f)$.

By using two orthogonal linear states of polarisation (SOPs), it is possible to generate two combs with different repetitions rates by using just one semiconductor or fibre laser.

Polarization beam splitter PBS1 redirects each SOP into a different path: the local oscillator path (corresponding to the "second path" as used above), and the reference/target path (corresponding to the "first path" as used above).

Polarization controllers POC1 and POC2 rotate the SOPs to restore the two SOPs with $I_x = I_y$, but with a phase difference of zero. The optical isolator OISO provides unidirectional pulse propagation. Polarization beam splitter PBS2 splits the pulse trains into two orthogonal SOPs propagating in the reference arm and the target arm. The beam expander BE expands the beam and directs it towards the target T. The pulse trains reflected from the target and the reference mirror RM are combined in PBS2 and are directed towards PBS3. In PBS3, the pulse train from the local oscillator path is combine separately with the reference and target paths. Two different combinations, i.e. the local oscillator-reference (LO-R) and the local oscillator target (LO-T) are detected by two photodetectors as interferograms showing the beating in each of the LO-T and LO-R signals. A Fourier transform is then applied to the LO-T and LO-R signals, from which a phase difference, and subsequently a distance may be extracted.

The following equations for the signal, reference, and local oscillator pulse trains can be found as follows:

$$E_R = \sum_m A_m \exp\left(i2\pi\left(mf + f_{ceo,sig}\right)t + i\Phi_R(z)\right),$$

$$E_T = \sum_m A_m \exp\left(i2\pi\left(mf + f_{ceo,sig}\right)(t - \tau) + i\Phi_T(z + L)\right), \qquad (1)$$

$$E_{LO} = \sum_n B_n \exp\left(i2\pi\left(n(f + \Delta f) + f_{ceo,LO}\right)t + i\Phi_L(z)\right).$$

Here $E_R$ and Er tar are the electrical fields of the signal pulses reflected from the reference arm and the target arm, $f$ and $f_{ceo,sig}$ are the repetition rate and the carrier-envelope offset frequencies for the reference and target pulse trains, $(f + \Delta f)$ and $f_{ceo,LO}$ are the repetition rate and the carrier-envelope offset frequencies for the local oscillator (LO) pulse train, $\Phi_l$ ($l$ = R, T, LO) is the phase, $\tau = 2Ln_g/c$ is the delay time between the reference arm and the target arm, where $n_g$ is the group refractive index at the carrier frequency.

The interferograms can be described as $|E_R + E_{LO}|^2$ and $|E_R + E_{LO}|^2$. The beating terms between LO and reference and LO and signal can be found as follows:

$$I_{R,LO}(t) = \sum_{m,n} A_m B_n \cos\left[2\pi\left(\left[m - n\right]f - n\Delta f + f_{ceo,sig} - f_{ceo,LO}\right)t + \Phi_R(z) - \Phi_L(z)\right],$$

$$I_{T,LO}(t) = \sum_{m,n} A_m B_n \cos\left[2\pi\left(\left[m - n\right]f - n\Delta f + f_{ceo,sig} - f_{ceo,LO}\right)t - 2\pi\left(mf + f_{ceo,sig}\right)\tau + \Phi_T(z + L) - \Phi_L(z)\right] \qquad (2)$$

The phase difference between the reference and target interference signals can be found as follows:

$$\Delta\varphi(mf) = 2\pi\left(mf + f_{ceo,sig}\right)\tau + \Phi_T(L+z) - \Phi_R(z). \qquad (3)$$

By using band pass filter, it is possible to scan the beating frequency between LO and signal pulse trains. Here scan time is of $S = 1/\Delta f$ with the step in time of $T_s = 1/f$, the number of scans is $N = S/T_s$. For $f = 100$ MHz and $\Delta f = 5$ KHz; $N = 20,000$. For increasing the signal to noise ratio, the scan time can be increased.

From the linear fit of the frequency dependence $mf$ of the phase difference, the distance can be found as follows:

$$L = \left(\frac{\Delta\varphi(mf)}{2\pi} + N\right)\frac{c}{2fn_g}, N = 0,1,\ldots \qquad (4)$$

$N > 1$ if the measurement distance exceeds the unambiguity range $R_{un} = c/(2fn_g)$ ($R_{un} = 1.5$ m for f = 100 MHz).

For the radar, part of the pulse train is redirected using mirror M3 to the photodetector. The obtained periodic electrical signal goes to the electrical amplifier EA and after amplification modulates the transmission antenna TEA. The microwave signal from the TAN is reflected from the target and detected by the receiver antenna RAN. The resulting electronic signal drives the current to the amplitude modulator AM. By passing the AM the pulse train from the LO is modulated and so electronic signal after PD4 comprising a beating LO-RAN signal.

Unlike LIDAR part in Fig.1, in the radar part, combs in LO and T, R parts have repetition rates $f$ and $(f + \Delta f)$. As a result, distance can be found as follows:

$$L = \left(\frac{\Delta\varphi_R(mf)}{4\pi} + N\right)\frac{c}{2(f + \Delta f)n_{g1}}, N = 0,1,\ldots \qquad (5)$$

The integer number N can be found from the Eqs. (4) and (5).

An alternative method of calculating the distances involves Fourier transform methods. As we will see, the same result is obtained using both methods.

The distance measurement techniques with using LIDAR and radar is found below. If we consider two pulses with the pulse separation $\tau$ and evolving phase shift given by $\Phi(t) = 2\pi i v_0 t$, the amplitude of pulses can be found as:

$$f(t) + f(t + \tau)\exp(i(\phi(t) - \phi_0))$$

The Fourier transform can be presented as follows:

$$S(v) = \left|F(v) + F(v - v_0)\exp\left(-i[2\pi\tau(v - v_0) + \phi_0]\right)\right|^2 = \left|F(v)\right|^2 + \left|F(v - v_0)\right|^2 + $$
$$\left(F(v)F(v - v_0)^* + F(v)^* F(v - v_0)\right)\cos\left(2\pi\tau(v - v_0) + \phi_0\right), \qquad (1')$$

Here $F(v)$ is the Fourier transform of $f$(t), and the asterisk denotes complex conjugation. As follows from Eq. (1'), optical spectrum is modulated with the frequency $v = 1/\tau$. For the pulse trains with repletion rates f and $(f + \Delta f)$ and the phase difference between two pulses $\phi_n$ changing from pulse-to-pulse with the frequency $f/N$, we have two time scale discretization: [1/f, 2/f,..., 1/$\Delta f$] for comb with the different repetition rate and [1/f, 2/f,..., N/f] for evolving phase difference ($N$ is the number of the periods required to restore the initial phase difference). Thus, if we combine the local oscillator LO pulse train with the reference R and reflected from target T pulse trains, we can find the following:

$$\Phi_{LO-R}(v) = 2\pi\tau_{LO-R}(v - v_0) + \phi_{0,LO-R}, \quad \Phi_{LO-T}(v) = 2\pi\tau_{LO-R}(v - v_0) + \phi_{0,LO-T}, \qquad (2')$$

and

$$\Delta\Phi(v) = \Phi_{LO-T}(v) - \Phi_{LO-R}(v) = \frac{4\pi L}{\lambda_c} + \frac{4\pi L}{V_{gr}}(v - v_0) + 2\pi m. \qquad (3')$$

Here $v$ is sampled from dc with step of $\Delta f$ to $f$ (for dual comb) or $f/N$ to $f$ for the evolving phase difference, $\lambda_c$ is the carrier wavelength, and $\phi_{LO-R} - \phi_{LO-T} = 4\pi L/\lambda_s$, $L = (T_{LO-T} - T_{LO-R})V_{gr}$, where $V_{gr}$ is the group velocity at the carrier frequency in the atmosphere. The $2\pi m$ ambiguity reflects ambiguity of the interferometric measurement.

The above is a version of the dual comb (DC) technique where two frequency combs with slightly different repetition rates $f$ and $(f + \Delta f)$ are used to collect the data signals resulting from the beating between local oscillator LO and reference signals and LO and signal from the target [13][14][15][16][17]. Each interferogram captured in the time domain is digitized for a scan time of $T_s = 1/\Delta f$ with the step in time of $1/f$ and then Fourier-transformed in the frequency domain.

[13] Schliesser, A., Picqué, N. and Hänsch, T.W., 2012. Nature Photonics, 6(7), pp.440-449.

[14] Udem, T., Holzwarth, R. & Hänsch, T.W. Nature 416, 233-237 (2002).

[15] Hänsch, T.W. Rev. Mod. Phys. 78, 1297 (2006).

[16] Coddington, I., Newbury, N., & Swann, W. (2016). Optica, 3(4), 414-426.

[17] Newbury et al. Patent No.: US 8,558,993 B2, Oct. 15, 2013

A simple linear fit of (3') as $\Delta\phi = \phi_0 + bv$ results in the distance based on the time-of-flight (TOF) measurement through $L_{tof} = bV_{gr}/(4\pi)$ and based on the interferometric (INT) measurement through $L_{int} = (\phi_0 + 2\pi m)\lambda_c/(4\pi)$. The $2\pi m$ ambiguity reflects the $\lambda_c/2$ range ambiguity of the interferometric measurement. The ambiguity range is present for TOF measurements as well: $R_{ar} = V_{gr}/(2f)$, so $R_{ar} = 1.5$ m for $f = 100$ MHz. By switching the roles of the signal and LO lasers and using the Vernier effect, it is possible the reach the ambiguity range $R_{ar} = V_{gr}/(2\Delta f)$ which is 30 km for $\Delta f = 5$ KHz[18].

[18] Coddington, I., Newbury, N., & Swann, W. (2016). Optica, 3(4), 414-426.

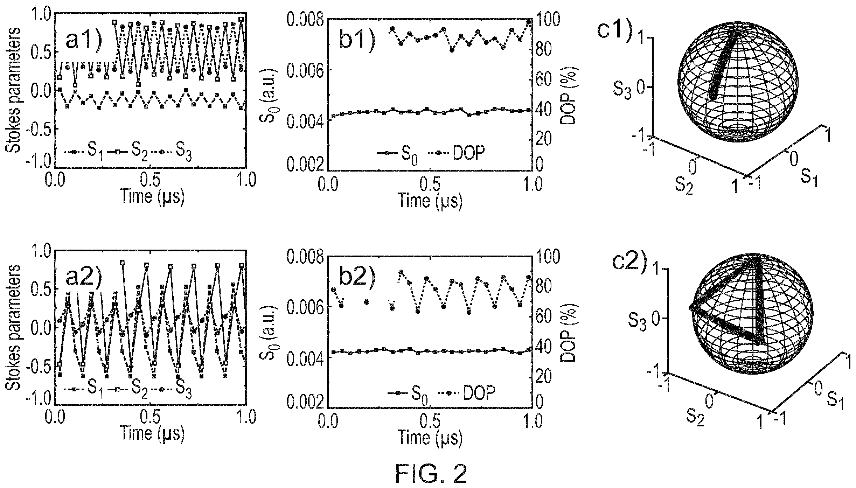

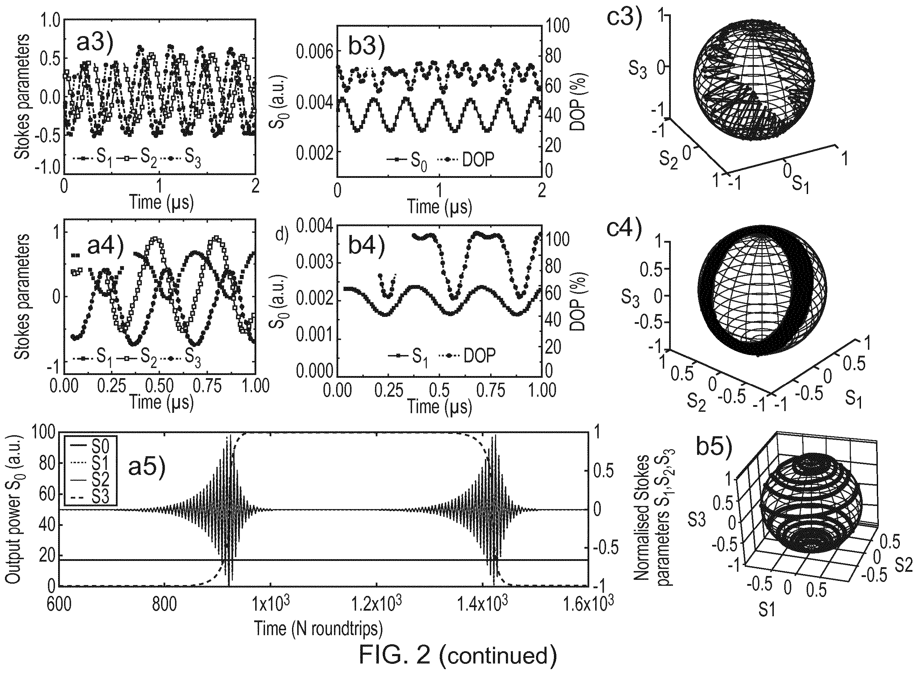

Lidar can operate by using just a single frequency comb with frequency $f$. As follows from (3'), the phase difference is evolving from pulse to pulse that is equivalent to the phase difference scanning. This can be realized by using comb laser with dynamically evolving states of polarizations (SOPs) shown in Fig. 2. In the simplest case (see Fig. 2, a1-c1, a2-c2), the powers of the two cross polarized modes are equal and aren't changing and the phase difference only changing with the frequency of $f/N$. Photodetectors in Fig. 1 are phase insensitive and so dual comb is required for the radar operation only.

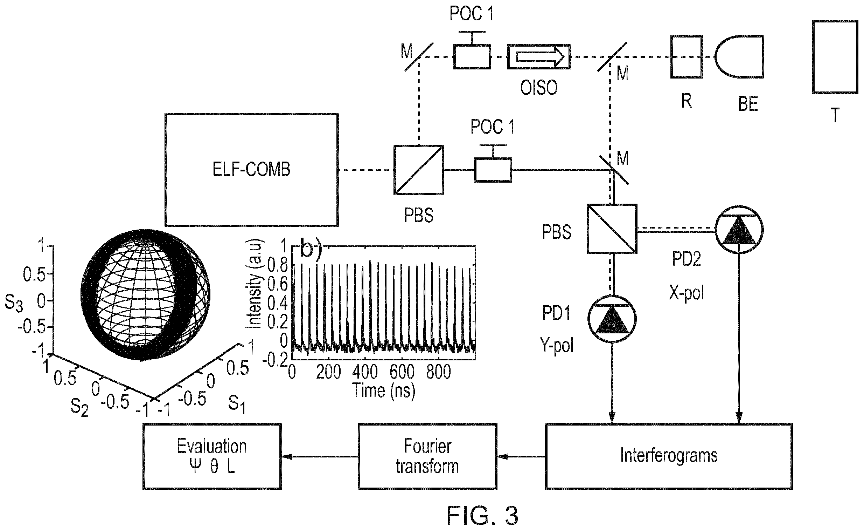

Fig. 3 demonstrates the ellipsometry technique. The pulse train from the comb laser is split into two orthogonal $x$- and $y$-polarized components by polarization beam splitter PBS. Polarization controllers POC1 and POC2 rotate the plane of polarization by $\pi/4$ and $-\pi/4$ respectively to give rise to a signal pulse train and a local oscillator pulse train, each having both $x$- and $y$-polarized components. The dynamic part of the phase difference evolves from pulse to pulse on the controllable trajectory which is shown, e.g. in Fig. 2. The signal pulse train passes through the optical isolator OISE and reflected back from the semi-transparent reference mirror RM. The other part of the signal is directed through the beam expander BE to the target T mirror and reflected back. The signal reflected from the reference mirror RM and the signal reflected from the target T is split into $x$- and $y$-polarized components, which are then mixed with $x$- and $y$-polarized components of the local oscillator signal, and then detected by photodetectors PD1, PD2 with the application of gating to separate LO-T and LO-R signals. After application of a Fourier transform, it is possible to extract the amplitude ratio and the phase difference between the orthogonal states of polarization using the difference evolving from pulse to pulse.

Combining spectroscopic ellipsometry with the dual comb technique of the present invention enables CRR measurement with ultra-high spectral resolution beyond the conventional limit. It offers a cost effective way to advance the dual comb technique. Equation (3') above can be modified to account for the $x$- and $y$-polarized components:

$$\Phi_{LO-R,X}(v) = 2\pi\tau_{LO-R}(v - v_0) + \phi_{X,LO-R}$$

$$\Phi_{LO-R,Y}(v) = 2\pi\tau_{LO-R}(v - v_0) + \phi_{Y,LO-R}$$

$$\Phi_{LO-T,X}(v) = 2\pi\tau_{LO-T}(v - v_0) + \phi_{X,LO-T}$$

$$\Phi_{LO-T,Y}(v) = 2\pi\tau_{LO-T}(v - v_0) + \phi_{Y,LO-T}$$

Here, $\phi_{X(Y),LO-R(LO-T)}$ are additional phases for $x$- and $y$- states of polarization related to the reflection from the reference and the target.

Based on the above equations, the phase difference between the orthogonal states of polarization and the amplitude ratio for the beating LO-T signal detected by photodetectors PD1 and PD2 can be found as follows:

$$\theta_{LO-T} = \Phi_{LO-T,X}(v) - \Phi_{LO-T,Y}(v) = \phi_{T,Y} - \phi_{T,X} = \arg(I_{PD2,LO-T}) - \arg(I_{PD1,LO-T}) + \pi$$

$$\rho_{LO-T} \equiv \tan(\Psi_{LO-T}) = \left| \frac{I_{PD1,LO-T}}{I_{PD2,LO-T}} \right|$$

By using time gating, the phase difference $\theta$ between the orthogonal $x$- and $y$-polarized components and the amplitude ratio $\tan(\Psi)$ for the beating LO-R signal detected by PD1 and PD2 can be found in an analogous manner.

The features disclosed in the foregoing description, or in the following claims, or in the accompanying drawings, expressed in their specific forms or in terms of a means for performing the disclosed function, or a method or process for obtaining the disclosed results, as appropriate, may, separately, or in any combination of such features, be utilised for realising the invention in diverse forms thereof.

While the invention has been described in conjunction with the exemplary embodiments described above, many equivalent modifications and variations will be apparent to those skilled in the art when given this disclosure. Accordingly, the exemplary embodiments of the invention set forth above are considered to be illustrative and not limiting.

**Claims**

1. A method for measuring the distance to a target (T) using LIDAR and RADAR, the method including the steps of:

   generating a beam of light, the beam being composed of:

   a first pulse train in a first state of polarization (SOP) and having a first repetition rate $f_1$, and
   a second pulse train in a second state of polarization and having a second repetition rate $f_2$;

   splitting the beam of light using a first polarization beam splitter (PBS1) into a first path for the first pulse train and a second path for the second pulse train;
   generating a reference signal and a target signal and a RADAR pulse train, each based on the first pulse train;
   generating a local oscillator signal having a reference component in the first state of polarization and a target component in the second state of polarization, by rotating the plane of polarization of the second pulse train;
   dividing the local oscillator signal into two separate pulse trains including a fourth pulse train before splitting the local oscillator signal into its constituent components;
   combining the reference signal and the reference component of the local oscillator signal to generate a first result;
   combining the target signal and the target component of the local oscillator signal to generate a second result;
   converting the RADAR pulse train from an optical signal into an electronic RADAR signal using a first photodetector (PD3);
   directing the RADAR signal towards a transmission antenna (TAN);
   transmitting the RADAR signal towards the target (T);
   receiving the RADAR signal at a receiving antenna (RAN);
   modulating the fourth pulse train based on the RADAR signal received at the receiving antenna (RAN), to give rise to a modulated optical signal; and
   detecting the modulated optical signal using a second photodetector (PD4) to generate a third result indicative of the distance to the target (T);
   determining the distance to the target (T) using the first result and the second result;
   determining the distance to the target (T) using the third result; and
   calibrating, using the third result, the distance determination calculated using the first and second results, and calibrating, using the first and second results, the distance determination calculated using the third result,
   wherein the beam of light is generated by a single laser comprising a birefringent component configured to generate the first pulse train and the second pulse train having the first and second states of polarizations and the first and second repetition rates $f_1$, $f_2$.

2. The method of claim 1, wherein the first state of polarization is orthogonal or substantially orthogonal to the second state of polarization.

**3.** The method of claim 1 or claim 2, further including the step of:
rotating the plane of polarization of the first pulse train to generate a third pulse train having a reference component in the first state of polarization and a target component in the second state of polarization.

**4.** The method of claim 3, further including:
splitting, using a second polarization beam splitter (PBS2), the third pulse train into its constituent components, wherein the reference component forms a reference pulse train and the target component forms a target pulse train, the method further including:

directing the reference pulse train into a reference arm of the first path;
directing the target pulse train along a target arm of the first path; and
in the target arm of the first path, splitting the target pulse train into the target signal, for direction towards the target, and the RADAR pulse train,
wherein the target arm includes the first photodetector (PD3).

**5.** The method of claim 4, wherein the reference arm includes a reference mirror (RM) arranged to reflect the reference pulse train back to the second polarization beam splitter (PBS2), at which point the reference pulse train is referred to as the reference signal.

**6.** The method of claim 5, further including:
directing the target pulse train towards the target (T), wherein the target arm includes a beam expander (BE) arranged to expand the target pulse train in order to obtain greater coverage of the target (T) by the target pulse train.

**7.** The method of claim 6, further including:

receiving a reflected target signal from the target (T);
directing the reflected target signal towards the second polarization beam splitter (PBS2);
combining, at the second polarization beam splitter (PBS2), the reference signal and the reflected target signal.

**8.** The method of any one of claims 1 to 7, wherein:

the first result is a first interferogram; and
the second result is a second interferogram.

**9.** A system for measuring the distance to a target (T), the system configured to perform the method of any one of claims 1 to 8.

**Patentansprüche**

**1.** Verfahren zum Messen des Abstands zu einem Ziel (T) unter Verwendung von LIDAR und RADAR, wobei das Verfahren folgende Schritte umfasst:

Erzeugen eines Lichtstrahls, wobei der Strahl aus Folgendem besteht:

einer ersten Impulsfolge in einem ersten Polarisationszustand (SOP) und die eine erste Wiederholungsrate $f_1$ aufweist, und
einer zweiten Impulsfolge in einem zweiten Polarisationszustand und die eine zweite Wiederholungsrate $f_2$ aufweist;

Aufspalten des Lichtstrahls unter Verwendung eines ersten Polarisationsstrahlteilers (PBS1) in einen ersten Pfad für die erste Impulsfolge und einen zweiten Pfad für die zweite Impulsfolge;
Erzeugen eines Referenzsignals und eines Zielsignals und einer RADAR-Impulsfolge, die jeweils auf der ersten Impulsfolge basieren;
Erzeugen eines lokalen Oszillatorsignals, das eine Referenzkomponente in dem ersten Polarisationszustand und eine Zielkomponente in dem zweiten Polarisationszustand aufweist, durch Rotieren der Polarisationsebene der zweiten Impulsfolge;
Aufteilen des lokalen Oszillatorsignals in zwei getrennte Impulsfolgen, einschließlich einer vierten Impulsfolge, vor dem Aufspalten des lokalen Oszillatorsignals in seine Bestandskomponenten;

Kombinieren des Referenzsignals und der Referenzkomponente des lokalen Oszillatorsignals, um ein erstes Ergebnis zu erzeugen;

Kombinieren des Zielsignals und der Zielkomponente des lokalen Oszillatorsignals, um ein zweites Ergebnis zu erzeugen;

Umwandeln der RADAR-Impulsfolge von einem optischen Signal in ein elektronisches RADAR-Signal unter Verwendung eines ersten Photodetektors (PD3);

Richten des RADAR-Signals auf eine Sendeantenne (TAN);

Senden des RADAR-Signals in Richtung des Ziels (T);

Empfangen des RADAR-Signals an einer Empfangsantenne (RAN);

Modulieren der vierten Impulsfolge basierend auf dem an der Empfangsantenne (RAN) empfangenen RADAR-Signal, um die Entstehung eines modulierten optischen Signals bereitzustellen; und

Detektieren des modulierten optischen Signals unter Verwendung eines zweiten Photodetektors (PD4), um ein drittes Ergebnis zu erzeugen, das den Abstand zum Ziel (T) angibt;

Bestimmen des Abstands zum Ziel (T) unter Verwendung des ersten Ergebnisses und des zweiten Ergebnisses;

Bestimmen des Abstands zum Ziel (T) unter Verwendung des dritten Ergebnisses; und

Kalibrieren der Abstandsbestimmung, die unter Verwendung des ersten und des zweiten Ergebnisses berechnet wurde, unter Verwendung des dritten Ergebnisses, und Kalibrieren der Abstandsbestimmung, die unter Verwendung des dritten Ergebnisses berechnet wurde, unter Verwendung des ersten und des zweiten Ergebnisses, wobei der Lichtstrahl durch einen einzelnen Laser erzeugt wird, umfassend eine doppelbrechende Komponente, die ausgelegt ist, um die erste Impulsfolge und die zweite Impulsfolge mit dem ersten und dem zweiten Polarisationszustand und der ersten und der zweiten Wiederholungsrate $f_1$, $f_2$ zu erzeugen.

2.  Verfahren nach Anspruch 1, wobei der erste Polarisationszustand orthogonal oder im Wesentlichen orthogonal zum zweiten Polarisationszustand ist.

3.  Verfahren nach Anspruch 1 oder Anspruch 2, das ferner den folgenden Schritt umfasst:
Rotieren der Polarisationsebene der ersten Impulsfolge, um eine dritte Impulsfolge mit einer Referenzkomponente in dem ersten Polarisationszustand und einer Zielkomponente in dem zweiten Polarisationszustand zu erzeugen.

4.  Verfahren nach Anspruch 3, das ferner Folgendes umfasst:
Aufspalten der dritten Impulsfolge in ihre Bestandskomponenten unter Verwendung eines zweiten Polarisationsstrahlteilers (PBS2), wobei die Referenzkomponente eine Referenzimpulsfolge bildet und die Zielkomponente eine Zielimpulsfolge bildet, wobei das Verfahren ferner Folgendes umfasst:

Richten der Referenzimpulsfolge auf einen Referenzarm des ersten Pfads;

Richten der Zielimpulsfolge entlang eines Zielarms des ersten Pfads; und

in dem Zielarm des ersten Pfads, Aufspalten der Zielimpulsfolge in das Zielsignal zum Richten in Richtung des Ziels und der RADAR-Impulsfolge, wobei der Zielarm den ersten Photodetektor (PD3) umfasst.

5.  Verfahren nach Anspruch 4, wobei der Referenzarm einen Referenzspiegel (RM) umfasst, der angeordnet ist, um die Referenzimpulsfolge zurück an den zweiten Polarisationsstrahlteiler (PBS2) zu reflektieren, wonach die Referenzimpulsfolge als Referenzsignal bezeichnet wird.

6.  Verfahren nach Anspruch 5, das ferner Folgendes umfasst:
Richten der Zielimpulsfolge auf das Ziel (T), wobei der Zielarm einen Strahlexpander (BE) umfasst, der angeordnet ist, um die Zielimpulsfolge auszuweiten, um eine größere Abdeckung des Ziels (T) durch die Zielimpulsfolge zu erhalten.

7.  Verfahren nach Anspruch 6, das ferner Folgendes umfasst:

Empfangen eines reflektierten Zielsignals von dem Ziel (T);

Richten des reflektierten Zielsignals auf den zweiten Polarisationsstrahlteiler (PBS2);

Kombinieren des Referenzsignals und des reflektierten Zielsignals an dem zweiten Polarisationsstrahlteiler (PBS2).

8.  Verfahren nach einem der Ansprüche 1 bis 7, wobei:

das erste Ergebnis ein erstes Interferogramm ist; und
das zweite Ergebnis ein zweites Interferogramm ist.

9. System zum Messen des Abstands zu einem Ziel (T), wobei das System ausgelegt ist, um ein Verfahren nach einem der Ansprüche 1 bis 8 durchzuführen.

**Revendications**

1. Procédé pour mesurer la distance par rapport à une cible (T) en utilisant un LIDAR et un RADAR, le procédé comprenant les étapes consistant à :

générer un faisceau de lumière, le faisceau étant composé :

d'un premier train d'impulsions dans un premier état de polarisation (SOP) et présentant un premier taux de répétition $f_1$, et
un deuxième train d'impulsions dans un second état de polarisation et présentant un second taux de répétition $f_2$ ;

diviser le faisceau de lumière en utilisant un premier diviseur de faisceau de polarisation (PBS1) en un premier trajet pour le premier train d'impulsions et un second trajet pour le deuxième train d'impulsions ;
générer un signal de référence et un signal cible et un train d'impulsions RADAR, chacun sur la base du premier train d'impulsions ;
générer un signal d'oscillateur local présentant une composante de référence dans le premier état de polarisation et une composante cible dans le second état de polarisation, en faisant tourner le plan de polarisation du deuxième train d'impulsions ;
diviser le signal d'oscillateur local en deux trains d'impulsions distincts incluant un quatrième train d'impulsions avant de diviser le signal d'oscillateur local en ses composantes constitutives ;
combiner le signal de référence et la composante de référence du signal d'oscillateur local pour générer un premier résultat ;
combiner le signal cible et la composante cible du signal d'oscillateur local pour générer un deuxième résultat ;
convertir le train d'impulsions RADAR d'un signal optique en un signal RADAR électronique en utilisant un premier photodétecteur (PD3) ;
diriger le signal RADAR vers une antenne de transmission (TAN) ;
transmettre le signal RADAR vers la cible (T) ;
recevoir le signal RADAR au niveau d'une antenne de réception (RAN) ;
moduler le quatrième train d'impulsions sur la base du signal RADAR reçu au niveau de l'antenne de réception (RAN), pour donner naissance à un signal optique modulé ; et
détecter le signal optique modulé en utilisant un second photodétecteur (PD4) pour générer un troisième résultat indicatif de la distance par rapport à la cible (T) ;
déterminer la distance par rapport à la cible (T) en utilisant le premier résultat et le deuxième résultat ;
déterminer la distance par rapport à la cible (T) en utilisant le troisième résultat ; et
calibrer, en utilisant le troisième résultat, la détermination de distance calculée en utilisant les premier et deuxième résultats, et calibrer, en utilisant les premier et deuxième résultats, la détermination de distance calculée en utilisant le troisième résultat,
dans lequel le faisceau de lumière est généré par un laser unique comprenant un composant biréfringent configuré pour générer le premier train d'impulsions et le deuxième train d'impulsions présentant les premier et second états de polarisations et les premier et second taux de répétition $f_1$, $f_2$.

2. Procédé selon la revendication 1, dans lequel le premier état de polarisation est orthogonal ou sensiblement orthogonal au second état de polarisation.

3. Procédé selon la revendication 1 ou 2, comprenant en outre l'étape consistant à :
faire tourner le plan de polarisation du premier train d'impulsions pour générer un troisième train d'impulsions présentant une composante de référence dans le premier état de polarisation et une composante cible dans le second état de polarisation.

4. Procédé selon la revendication 1 ou 3, comprenant en outre les étapes consistant à :

diviser, en utilisant un second diviseur de faisceau de polarisation (PBS2), le troisième train d'impulsions en ses composantes constitutives, dans lequel le composant de référence forme un train d'impulsions de référence et le composant cible forme un train d'impulsions cible, le procédé comprenant en outre les étapes consistant à :

diriger le train d'impulsions de référence dans un bras de référence du premier trajet ;
diriger le train d'impulsions cible le long d'un bras cible du premier trajet ; et
dans le bras cible du premier trajet, diviser le train d'impulsions cible en le signal cible, pour direction vers la cible, et le train d'impulsions RADAR,
dans lequel le bras cible inclut le premier photodétecteur (PD3).

5. Procédé selon la revendication 4, dans lequel le bras de référence inclut un miroir de référence (RM) agencé pour réfléchir le train d'impulsions de référence vers le second diviseur de faisceau de polarisation (PBS2), point au niveau duquel le train d'impulsions de référence est appelé le signal de référence.

6. Procédé selon la revendication 1 ou 5, comprenant en outre les étapes consistant à :
diriger le train d'impulsions cible vers la cible (T), dans lequel le bras cible inclut un dilatateur de faisceau (BE) agencé pour dilater le train d'impulsions cible afin d'obtenir une plus grande couverture de la cible (T) par le train d'impulsions cible.

7. Procédé selon la revendication 1 ou 6, comprenant en outre les étapes consistant à :

recevoir un signal cible réfléchi en provenance de la cible (T) ;
diriger le signal cible réfléchi vers le second diviseur de faisceau de polarisation (PBS2) ;
combiner, au niveau du second diviseur de faisceau de polarisation (PBS2), le signal de référence et le signal cible réfléchi.

8. Procédé selon l'une quelconque des revendications 1 à 7, dans lequel :

le premier résultat est un premier interférogramme ; et
le second résultat est un second interférogramme.

9. Système pour mesure la distance par rapport à une cible (T), le système étant configuré pour exécuter le procédé selon l'une quelconque des revendications 1 à 8.

FIG. 1

FIG. 2

FIG. 2 (continued)

FIG. 3

| | SHORT RANGE RADAR (24 GHZ UWB) | LONG-RANGE RADAR (77 GHZ) | LIDAR | ULTRASONIC | VIDEO |
|---|---|---|---|---|---|
| RANGE MEASUREMENT <2 m | ++ | – | 0 | ++ | – |
| RANGE MEASUREMENT 2 to 30 m | ++ | ++ | ++ | – | – |
| RANGE MEASUREMENT 30 to 100 m | – | ++ | + | – – | – |
| ANGLE MEASUREMENT <10 DEGREES | + | + | ++ | – | ++ |
| ANGLE MEASUREMENT >30 DEGREES | 0 | – | ++ | 0 | ++ |
| ANGULAR RESOLUTION | 0 | 0 | ++ | – | ++ |
| DIRECT VELOCITY MEASUREMENT | ++ | ++ | – – | 0 | – – |
| OPERATION in RAIN | ++ | + | – | 0 | 0 |
| OPERATION in FOG or SNOW | ++ | ++ | – | + | – |
| BLOCKAGE (DIRT on SENSOR) | ++ | ++ | 0 | + | – – |
| OPERATION at NIGHT | ++ | ++ | ++ | ++ | – – |

| | | | |
|---|---|---|---|
| ++ IDEALLY SUITED | | – FEASIBLE, ONLY WITH LARGE EFFORT | |
| + GOOD PERFORMANCE | | – – IMPOSSIBLE | |
| 0 POSSIBLE, MODEST PERFORMANCE | | | |

FIG. 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 2018231654 A1
- US 8558993 B2, Newbury

### Non-patent literature cited in the description

- **A. JENKINS.** Remote sensing technology for automotive safety. *Microwave Journal,* 2007, vol. 50
- Absolute distance measurement by dual-comb interferometry with adjustable synthetic wavelength. **J. LEE et al.** Measurement Science and Technology. IOP, 2013, vol. 24
- Dual-Comb Interferometry via Repetition-Rate Switching of a Single Frequency Comb. **D. R. CARLSON et al.** Arxiv.Org. Cornell University Library, 2018
- **SANDRO M. LINK ; ALEXANDER KLENNER ; MARIO MANGOLD ; CHRISTIAN A. ZAUGG ; MATTHIAS GOLLING ; BAUKE W. TILMA ; URSULA KELLER.** Dual-comb modelocked laser. *Opt. Express,* 2015, vol. 23, 5521-5531
- **TSATOURIAN, V. ; SERGEYEV, S. V. ; MOU, C. ; ROZHIN, A. ; MIKHAILOV, V. ; RABIN, B. ; TURITSYN, S. K.** *Scientific reports,* 2013, vol. 3
- **S. SERGEYEV ; CH. MOU ; A. ROZHIN ; S. K. TURITSYN.** *Optics Express,* 2012, vol. 20, 27434-27440
- **CH. MOU ; S. SERGEYEV ; A. ROZHIN ; S. TURISTYN.** All-Fiber Polarization Locked Vector Soliton Laser Using Carbon Nanotubes. *Optics Lett.,* 2011, vol. 36, 3831-3833
- **S. V. SERGEYEV.** *Optics Lett.,* 2016, vol. 41, 4700-4703
- **SERGEYEV, S. V. ; MOU, C. ; TURITSYNA, E. G. ; ROZHIN, A. ; TURITSYN, S. K. ; BLOW, K.** *Light: Science and Applications,* 2014, vol. 3 (1), e131
- **SERGEYEV, S. V.** *Phil. Trans. R. Soc. A,* 2014, vol. 372 (2027), 20140006
- **SCHLIESSER, A. ; PICQUÉ, N. ; HÄNSCH, T.W.** *Nature Photonics,* 2012, vol. 6 (7), 440-449
- **UDEM, T. ; HOLZWARTH, R. ; HÄNSCH, T.W.** *Nature,* 2002, vol. 416, 233-237
- **HÄNSCH, T.W.** *Rev. Mod. Phys.,* 2006, vol. 78, 1297
- **CODDINGTON, I. ; NEWBURY, N. ; SWANN, W.** *Optica,* 2016, vol. 3 (4), 414-426